Europäisches Patentamt

European Patent Office

Office européen des brevets

(11) Publication number: **0 016 275**
**B1**

# EUROPEAN PATENT SPECIFICATION

(45) Date of publication of patent specification: **12.09.84**

(51) Int. Cl.³: **F 16 L 21/02, F 16 J 15/10**

(21) Application number: **79301259.2**

(22) Date of filing: **29.06.79**

(54) **A resilient sealing ring.**

(43) Date of publication of application:
**01.10.80 Bulletin 80/20**

(45) Publication of the grant of the patent:
**12.09.84 Bulletin 84/37**

(84) Designated Contracting States:
**AT BE CH DE FR GB IT LU NL SE**

(56) References cited:
**AT-B- 200 867**
**AT-B- 341 286**
**DE-A-1 801 013**
**DE-B-1 214 955**
**FR-A-1 457 165**
**FR-A-2 052 247**
**GB-A-1 050 914**
**US-A-2 230 725**
**US-A-3 173 694**
**US-A-3 386 745**
**US-A-3 573 871**
**US-A-3 973 783**

(73) Proprietor: **FINRING MANUFACTURING
PTY.LIMITED**
**20 Keats Street**
**Sunnybank, Queensland, 4109 (AU)**

(72) Inventor: **Wilson, Ralph**
**20 Keats Street**
**Sunnybank, Queensland, 4109 (AU)**

(74) Representative: **Batchellor, John Robert et al
BATCHELLOR, KIRK & EYLES 2 Pear Tree Court
Farringdon Road
London EC1R 0DS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to pipe connection means and in particular it relates to an improved form of resilient sealing ring for sealing socketed pipe joints.

At present there are various ways of sealably joining pipes and the methods used vary according to the type of pipes used. Earthenware or vitrified clay pipes are commonly formed with one socket end and one plain end and such pipes are adapted to be joined sealably together by interposing a circular cross-section O-ring between the plain end of one pipe and the socket end of an adjoining pipe and forcing the ends into engagement. The engagement is accomplished by relative movement between the pipe ends to cause the O-ring to do one complete roll so that it assumes a compressed attitude between the socket end and the plain end of the pipes.

The collar length must be sufficient to enable the O-ring to complete the full roll to its engaged position and the O-ring must be accurately placed prior to forcing the ends together to ensure that the ring does not twist and form an ineffective seal. When the joint has been made it is normally necessary to check that the O-ring is accurately disposed in its operative position. The engagement action is accompanied by compressing of the O-ring and often the compression forces are sufficient to break the relatively long collar of the socket end of the pipe so that the joint and the pipe section are ruined.

Such fractures sometimes occur immediately upon installation or after some time has elapsed. If the failure occurs immediately, then the pipe has to be replaced and the inconvenience caused is minimal. However, it often happens that a pipe which is adjacent the head of a line of joined pipes fails due to the abovementioned compression forces after a period of time has elapsed. In such cases the whole pipeline assembly has to be dismantled to replace the fractured pipe. This problem is particularly troublesome in an underground installation as the pipeline has to be dug up to find the broken section to be replaced.

In a typical known arrangement, the O ring is positioned in the socket and the plan end is inserted into the socket to make the seal. A slightly more sophisticated arrangement of this kind is shown in Austrian patent specification no. 200867 in which the section of the sealing ring is semi-circular rather than circular, has an additional sealing lip 6, to engage the inserted plain end, and is more positively located in the socket end by means of an external annular flange 5. However there may still be a problem of the sealing ring rolling out of position on insertion of the spigot end, with a rounded profile of this kind particularly when it is mounted in the socket.

Another known type of sealing arrangement is shown in U.S. patent specification no. 3,173,694, in which Figure 7 for example, shows a sealing ring which is adapted to be fitted to the inserted pipe end (2) rather than to the socket end and has an external fin (14) adapted to engage the internal surface of the socket, and a trailing fin (15) which engages the surface of the plan end. This device however, suffers from a rather inadequate mating arrangement with the plain end in the form of a single step-like abutment, and its leading edge is rather rounded as in the case of the device of the abovementioned Austrian specification. Consequently there is still a possibility of the seal being rolled out of position on assembly of the joint and poor resistance to external pressure.

Accordingly, it is an object of this invention to provide an improved sealing ring for socket type pipe joints which will overcome the abovementioned disadvantages of the presently available seals and which will be reliable and efficient in use.

Underground pipelines are often subject to external water pressure from the surrounding earth which is greater than the pressure within the pipe. The present invention enables a seal to be formed between pipes which will prevent ingress of fluid into the interior of the pipe from outside. Furthermore, the present invention aims to provide a sliding joint as opposed to a rolling joint whereby the seal can be used in wet and damp trench conditions without detriment to the standard of the finished joint. It is also desirable to prevent roots penetrating past seals into the pipelines and the present invention provides a seal which will be effective in preventing the penetration of roots past the seal into the interior of the jointed pipes. Other objects and advantages of the invention will become apparent from the following description.

Accordingly the present invention provides a resilient seal ring of the type adapted to be interposed between the spigot end of one pipe and the overlapping socket end of an adjoining pipe to make a joint, said sealing ring in use being located on said spigot end of said one pipe whilst said spigot end is slid into operative engagement with said socket end; said sealing ring including operative leading and trailing ends, said leading end being located adjacent the spigot end of said pipe; said sealing ring also including interengaging means for engaging with co-operating means on said pipe spigot, said sealing ring comprising a body portion having a leading tapered outer surface and inner and outer trailing sealing fins; characterised in that said inner trailing fin has an outer surface which tapers inwardly from the rear edge of a generally axially extending annular surface of said body portion, and in that said outer trailing fin is substantially wedgeshaped in cross-section and has an inner surface which extends outwardly and rearwardly from the foremost edge of said annular surface and an outer surface which extends outwardly and rearwardly of the rearmost end of the leading outer surface of said body portion; said inter-engaging means comprising an annular flange adapted for engagement with a groove in said spigot, said annular flange being located substantially under said annular surface.

In order that the invention may be more readily understood and put into practical effect, reference will now be made to the accompanying drawings which illustrate preferred embodiments of the invention and wherein:—

Figure 1 illustrates a resilient sealing ring according to the present invention, partly cut away to illustrate the cross-sectional configuration of the ring;

Figure 2 is a cross-sectional view illustrating the ring operably supported on the spigot end of a pipe and arranged for connection to the socket end of adjoining pipes;

Figure 3 illustrates an alternative form of joint made in accordance with the present invention; and

Figure 4 is an enlarged cross-sectional view of a typical sealing ring made in accordance with the present invention and dimensioned to illustrate relative proportions.

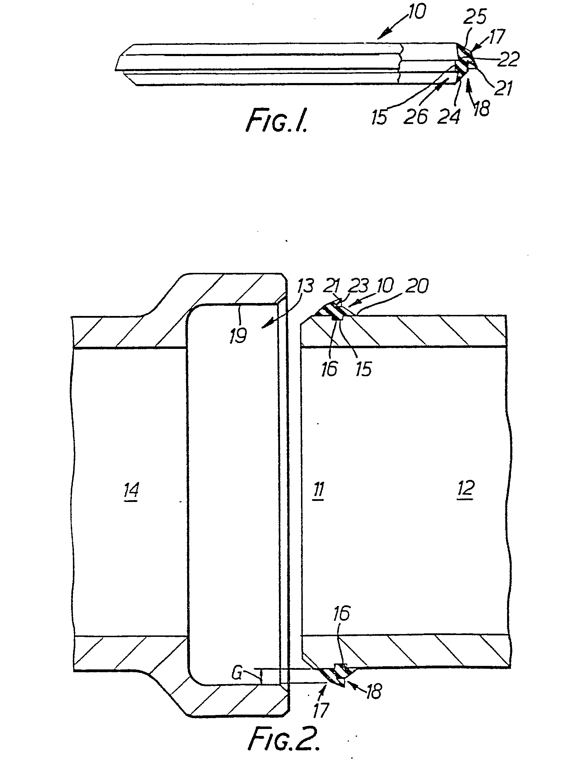

The sealing ring 10 of the embodiment illustrated in Figures 1 to 4 is adapted to be located about the plan end of a pipe 12 for sliding engagement within the socket end 13 of an adjoining pipe 14. The ring 10 has an abutment portion 15 around its inside surface which is adapted to be engaged within a corresponding groove 16 in the plain end 11 of the pipe 12. The engagement of the abutment portion 15 within the groove 16 positively locates the sealing ring about the plain end 11. The sealing ring 10 supported about the plain end is forced slidably into engagement within the lubricated socket end 13 of the adjoining pipe, accompanied by compression of the sealing ring 10.

As shown in more detail in Figure 4 the leading portion 17 of the sealing ring 10 is thick and has a steep inward taper while the trailing portion 18 of the ring is provided with the oppositely directed fins 21 and 24 which, in use, diverge rearwardly towards a respective one of an inner face 19 of the socket end 13 and the outer face 20 of the plain end 11 as shown in Figure 2. As the sealing ring is compressed by sliding engagement into the socket end 13 the leading portion is compressed inwardly and the outwardly diverging fin 21 is maintained in sealing contact with the inner face 19 and is deformed so that the gap separating the fin 21 from the body portion 22 of the ring is reduced. However, the back face 23 of the fin 21 is still in communication with the medium exteriorly of the joint so that if the pipe is buried underground in a wet location the external water pressure will force the fin 21 into sealing engagement with the inner surface 19 and the inner fin 24 into sealing engagement with the surface 20 of the plain end of the pipe 12. Of course, sealing pressure is increased with increase in outside pressure. Thus, the rearward diverging face ensures that an effective seal is maintained against infiltration by the medium exteriorly of the seal.

The thick leading portion 17 has a thickness dimension A in its uncompressed attitude about thirty per cent greater than the gap G between the outer surface 20 and the inner surface 19 of the respective plain end and socket end of adjoining pipes. Suitably the ring is made of a resilient material having a density reckoned by the Shaw scale of about 48 to 52 units so that when the chunky portion 17 of the ring is compressed between the plain end 12 and the socket end 13 an effective seal is made between the pipes to prevent egress of fluid from the pipe joint. The compression of the chunky portion 17 affords a sealing effect similar to the sealing effect provided by a conventional circular cross-sectioned O-ring. Also, the portion 17, by virtue of its radial dimension, constitutes a locating portion which operatively positions the socket end 13 and the spigot end of pipe 12 in their operative substantially concentric relationship.

The leading outer surface 25 of the ring 10 slopes rearwardly to assist in the compression of the chunky portion of the ring 17 by ramp action as the ring, supported about the plain end 12, is slid into the socket end 13 of the adjoining pipe. Furthermore, it will be seen that the trailing end portion 26 continues a relatively large thickness rearwardly to the junction with the outer fin 21. This is provided to give the ring a support stiffness from the trailing portion of the ring to prevent the leading chunky portion being twisted back upon itself as it is compressed into the socket end 13 of the adjoining pipe.

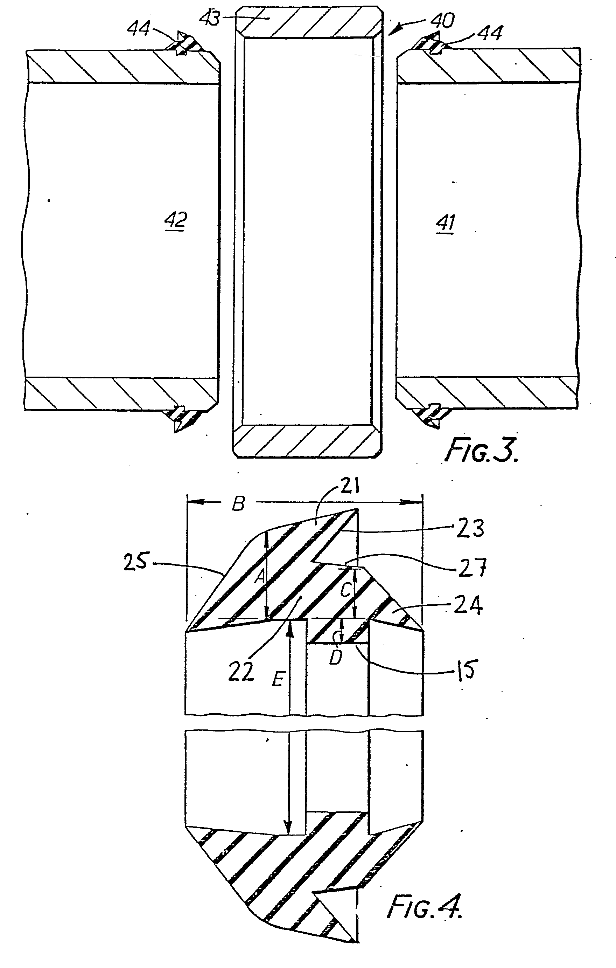

The inner fin 24 extends from the trailing end portion 26 which comprises a continuation of the chunky leading end 17 maintained at a dimension C approximately equal to or greater than sixty per cent of the gap G. Preferably, the transverse thickness D of the inwardly extending abutment portion 15 is about forty per cent of the dimension G. These proportions are nominated for the ring in its free attitude and of course the ring has to be stretched so as to fit tightly about the plan end 12. Suitably the dimension E — the effective internal diameter of the ring — is less than the outer diameter of the plan end 12 by about ten to fifteen per cent. Conventionally, the gap dimensions between the plain end and the spigot end of adjoining pipes varies according to the type of ring used, but a gap between the plain end and the spigot end of pipes in the range of up to 150 millimetres diameter is usually approximately nine millimetres. This gap is commonly increased to eleven millimetres in pipes beyond this dimension and up to six hundred millimetres. These gaps are suitable for the ring according to the present invention, but they may be decreased if desired to enable a more economical pipe socket to be formed. If desired a joint may be formed as illustrated in Figure 3, utilising two seals and a separate collar. The dimension B is preferably about three times dimension A.

If desired, a loose collar joint 40 may be used for connecting together the spigot ends of pipes 41 and 42, as shown in Figure 3. In this form the loose collar 43 is adapted to be engaged about the respective ends of pipes to be joined, each being fitted with a seal 44 according to the present invention.

Tests have shown very favourable results for the present invention. For example, a pipe line laid from randomly selected earthenware pipes fitted with the recommended O-ring seals failed at seventeen pounds per square inch (1,17 bar). The line was then taken up and each spigot end grooved to accept the ring illustrated in Figure 1. The line was reassembled with the same pipes and tested, up to a test pressure of 45 pounds per square inch (3,1 bar) without failure. Of course, this is far in excess of the required test pressure.

While the seal will stand a very high internal pressure its ability to withstand infiltration pressures is even greater, and this enables the sealing ring of the present invention to be used very effectively in underground locations where the exterior pressure is far in excess of the interior pressure.

As the joint is formed with a lubricant and can be affected in wet conditions, dewatering apparatus commonly utilised to keep trenches dry for the fitting of O-ring seals is not required.

### Claims

1. A resilient seal ring (10) of the type adapted to be interposed between the spigot end (11) of one pipe (12) and the overlapping socket end (13) of an adjoining pipe (14) to make a joint, said sealing ring (10) in use being located on said spigot end (11) of said one pipe (12) whilst said spigot end is slid into operative engagement with said socket end; said sealing ring (10) including operative leading and trailing ends, said leading end being located adjacent the spigot end of said pipe; said sealing ring (10) also including interengaging means (15) for engaging with co-operating means (16) on said pipe spigot, said sealing ring comprising a body portion (22) having a leading tapered outer surface (25) and inner and outer trailing sealing fins (24, 21); characterised in that said inner trailing fin (24) has an outer surface which tapers inwardly from the rear edge of a generally axially extending annular surface (27) of said body portion, and in that said outer trailing fin (21) is substantially wedge-shaped in cross-section and has an inner surface which extends outwardly and rearwardly from the foremost edge of said annular surface (27) and an outer surface which extends outwardly and rearwardly of the rearmost end of the leading outer surface (25) of said body portion; said inter-engaging means (15) comprising an annular flange adapted for engagement with a groove (16) in said spigot, said annular flange being located substantially under said annular surface (27).

2. A resilient sealing ring according to claim 1, wherein said leading end tapers towards a leading edge disposed inwardly of the said inner radial extremity of said body portion (22).

3. A resilient sealing ring according to claim 1, or claim 2, wherein the radial dimension of said body portion (22) is substantially 30% greater than the gap between the respective inner and outer surfaces of the concentrically disposed socket end (13; 43) and spigot end (11; 41, 42) of said pipes.

4. A resilient sealing ring according to any one of the preceding claims, wherein said annular flange (15) has a substantially rectangular cross-section.

5. A resilient sealing ring according to any one of the preceding claims, wherein the overall length of said seal (10; 44) from its leading end it its trailing end is approximately three times the radial dimension of said body portion (22).

### Revendications

1. Bague d'étanchéité élastique (10) adaptée à être interposée entre l'extrémité mâle (11) d'un premier tuyau (12) et l'extrémité femelle recouvrante (13) du tuyau adjacent (14) afin de produire un joint, ladite bague d'étanchéité (10) étant, pendant l'utilisation, placée sur ladite extrémité mâle (11) dudit premier tuyau (12), pendant que ladite extrémité mâle glisse pour s'emboîter dans ladite extrémité femelle; ladite bague d'étanchéité (10) comportant des extrémités antérieure et postérieure, ladite extrémité antérieure étant située près de l'extrémité mâle dudit tuyau; ladite bague d'étanchéité (10) comportant également des moyens d'inter-contact (15) pour venir au contact de moyens coopérants (16) situés sur ladite partie mâle, ladite bague d'étanchéité comprenant un corps (22) ayant une surface extérieure antérieure inclinée (25) et des ailettes intérieures et extérieures postérieures (24, 21), caractérisée en ce que ladite ailette postérieure (24) a une surface extérieure qui s'incline vers l'intérieur à partir du bord arrière d'une surface annulaire s'étendant d'une manière générale axialement (27) dudit corps, et en ce que ladite ailette postérieure extérieure (21) a sensiblement une section en coin et a une surface intérieure qui s'étend vers l'extérieur et en arrière à partir du bord le plus antérieur de ladite surface annulaire (27) et une surface extérieure qui s'étend à l'extérieur et en arrière de l'extrémité la plus en arrière de la surface extérieure antérieure (25) dudit corps; lesdits moyens d'inter-contact (15) comprenant une bordure annulaire adaptée à s'engager dans une gorge (16) de ladite partie mâle, cette bordure annulaire étant située pratiquement sous ladite surface annulaire (27).

2. Bague d'étanchéité élastique selon la revendication 1, dans laquelle ladite extrémité antérieure s'incline vers un bord antérieur disposé intérieurement par rapport à ladite extrémité radiale intérieure dudit corps (22).

3. Bague d'étanchéité élastique selon la revendication 1 ou 2, dans laquelle la dimension radiale dudit corps (22) est supérieure d'environ 30% à l'intervalle entre les surfaces intérieures et extérieures respectives des extrémités femelles (13, 43) et mâles (11, 31, 42) disposées concentriquement desdits tuyaux.

4. Bague d'étanchéité élastique selon l'une quelconque des revendications précédentes, dans laquelle ladite bordure annulaire (15) a sensiblement une section rectangulaire.

5. Bague d'étanchéité élastique selon l'une quelconque des revendications précédentes, dans laquelle la longueur totale dudit joint (10, 44) de son extrémité antérieure à son extrémité postérieure est approximativement le triple de la dimension radiale dudit corps (22).

**Patentansprüche**

1. Elastischer Dichtring (10), der zwischen das glatten Ende (1) einer Röhre (12) und das überlappende Muffenende (13) einer benachbarten Röhre (14) positioniert werden kann, um eine Verbindung herzustellen, wobei der Dichtring (10) im Betrieb auf dem genannten glatten Ende (11) der genannten einen Röhre (12) angeordnet ist, während das genannte glatte Ende in Wirkungseingriff mit dem genannten Muffenende geschoben wird; wobei der Dichtring (10) wirksame vordere und hintere Enden umfaßt, von denen das vordere Ende neben dem glatten Ende des genannten Rohrs angeordnet ist; wobei der Dichtring (10) ferner eine Zwischen-Eingriffseinrichtung (15) für den Eingriff mit der zusammenwirkenden Einrichtung (16) des glatten Rohres aufweist und der Dichtring einen Körperabschnitt (22) umfaßt, der eine vordere, abgeschrägte äußere Oberfläche (25) und innere und äußere hintere Dichtrippen (24, 21) umfaßt; dadurch gekennzeichnet, daß die innere hintere Rippe (24) eine äußere Oberfläche aufweist, welche von dem rückwärtigen Rand einer im allgemeinen sich axial erstreckenden ringförmigen Oberfläche (27) des genannten Körperabschnitts nach innen abgeschrägt ist, und daß die genannte äußere Rippe (21) im Querschnitt keilförmig ausgebildet ist und eine innere Oberfläche hat, welche sich von dem vordersten Rand der genannten ringförmigen Oberfläche (27) nach außen und nach hinten erstreckt, und eine äußere Oberfläche, welche sich von dem hintersten Ende der vorderen äußeren Oberfläche (25) des genannten Körperabschnitts nach außen und hinten erstreckt; wobei die ZwischenEingriffseinrichtung (15) einen ringförmigen Flansch aufweist, welcher zum Eingriff mit einer Nut (16) in dem genannten glatten Ende ausgebildet ist, wobei der genannte ringförmige Flansch im wesentlichen under der genannten ringförmigen Oberfläche (27) angeordnet ist.

2. Elastischer Dichtring nach Anspruch 1, bei welchem das vordere Ende, welches zu der vorderen Kante abgeschrägt ist, innerhalb der genannten inneren radialen Extremität des genannten Körperabschnitts (22) angeordnet ist.

3. Elastischer Dichtring nach Anspruch 1 oder 2, bei welchem die radiale Dimension des genannten Körperabschnitts (22) im wesentlichen 30% größer als der Spalt zwischen den entsprechenden inneren und äußeren Oberflächen der konzentrisch angeordneten Muffenenden (13; 43) und glatten Enden (11; 41, 42) der genannten Rohre ist.

4. Elastischer Dichtring nach einem der vorhergehenden Ansprüche, bei welchem der genannte ringförmige Flansch (15) einen im wesentlichen rechteckigen Querschnitt hat.

5. Elastischer Dichtring nach einem der vorhergehenden Ansprüche, bei welchem die Gesamtlänge der genannten Dichtung (10; 44) von ihrem vorderen Ende zu ihrem hinteren Ende etwa dreimal so groß wie die radiale Dimension des genannten Körperabschnitts (22) ist.

0016 275

FIG.1.

FIG.2.

**0 016 275**

Fig.3.

Fig.4.

2